Europäisches Patentamt

European Patent Office

Office européen des brevets

(19)

(11) Veröffentlichungsnummer: **0 024 291
B1**

(12) **EUROPÄISCHE PATENTSCHRIFT**

(45) Veröffentlichungstag der Patentschrift:
27.10.82

(21) Anmeldenummer: **80103782.1**

(22) Anmeldetag: **03.07.80**

(51) Int. Cl.³: **C 08 K 3/40,** C 09 D 5/00,
F 16 C 33/28

(54) **Verbundmaterial für Körper oder Schichten mit hoch-verschleissfester Gleit- oder Reiboberfläche.**

(30) Priorität: **06.07.79 DE 2927362**

(43) Veröffentlichungstag der Anmeldung:
**04.03.81 Patentblatt 81/9**

(45) Bekanntmachung des Hinweises auf die Patenterteilung:
**27.10.82 Patentblatt 82/43**

(84) Benannte Vertragsstaaten:
**AT DE FR GB IT**

(56) Entgegenhaltungen:
**AU-D-934 466
BE-A-558 349
BE-A-674 226
DE-A-1 658 690
DE-A-2 443 835
LU-A-64 845**

(73) Patentinhaber: **Glyco-Metall-Werke Daelen & Loos GmbH, Stielstrasse 11, D-6200 Wiesbaden (DE)**

(72) Erfinder: **Danilo, Sternisa, Ing.grad., Köndringer Weg 13, D-7830 Emmendingen 15 (DE)**
Erfinder: **Schneider, Walter, Ing. grad., Gutenbergstrasse 6, D-6335 Naunheim 2 (DE)**
Erfinder: **Hodes, Erich, Dr., Dipl.-Chem., Helgebornstrasse 52, D-6365 Rosbach 3 v.d.Höhe (DE)**
Erfinder: **Mann, Horst, Rheinstrasse 84, D-6200 Wiesbaden (DE)**

(74) Vertreter: **Seids, Heinrich, Dipl.-Phys., Bierstadter Höhe 15 Postfach 5105, D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Verbundmaterial für Körper oder Schichten mit hoch-verschleißfester Gleit- oder Reiboberfläche

Die Erfindung bezieht sich auf Verbundmaterial für Körper oder Schichten mit hoch-verschleißfester Gleit- oder Reiboberfläche, das ein organisches Polymeres und pulverförmiges anorganisches Glas in Teilchenform enthält. In AT-PS 349 838 wird vorgeschlagen, die Laufschicht von porösen Schmiermittel-imprägnierten Lagerschalen mit einer Matrix aus dicht gepackten, festen, einzelnen Teilchen aufzubauen, wobei diese Teilchen Glas-Mikrokugeln mit Durchmesser von 37 bis 53 µm sein können. Diese Glas-Mikrokugeln sollen auf ihrer Oberfläche mit Bindemittel versehen und mittels dieses Bindemittels in der Matrix zusammengehalten werden. Die Abriebfestigkeit solcher bekannten Verbundmaterialien ist jedoch nur relativ gering. Außerdem ergibt sich durch das Belegen der Glas-Mikrokugeln mit Bindemittel, also einer Schlichte, eine Reihe weiterer Mängel und Schwierigkeiten:

a) die neben den Haftvermittlern vorhandenen oberflächenaktiven Substanzen solcher Schlichte verhindern entweder die Sorption des Haftvermittlers an der Glasoberfläche oder sie blockieren die funktionellen Gruppen des Haftvermittlers.

b) Die in Schlichte enthaltenen Makromoleküle (Polymerdispersionen) bilden auf der Glasoberfläche eine Schicht, deren Adhäsion zum Harz kleiner als die Adhäsion Glas/Harz ist.

c) Die Glasoberfläche wird von Polymeren aus der Schlichte unterschiedlich belegt.

Die DE-OS 1 947 647 nennt einen Lagerwerkstoff, der sich aus einer Substrat-Metall-Oberfläche und einer porösen Harzschicht zusammensetzt, die integral mit der Metalloberfläche versintert ist und aus einem Polycarbonat, Polysulfon oder Polyphenylenoxid besteht und in die poröse Harzschicht ein Hilfsstoff, z. B. Glas, eingebracht ist. Über die Teilchenbeschaffenheit dieses Hilfsstoffes Glas und über die besonderen Eigenschaften eines solchen mit Hilfsstoff Glas versetzten Lagerwerkstoffs werden jedoch keine speziellen Angaben gemacht, außer daß die Porosität des Werkstoffs erhöht werden kann.

DE-OS 2 118 931 beschreibt ein Verbundmaterial, welches aus einem organischen Polymeren und einem anorganischen Oxidglas mit Teilchengröße zwischen 250 µm und 600 µm besteht. Auch solches Verbundmaterial vermag keine wesentlich verbesserten Eigenschaften durch die Beigabe von Glasteilchen zu ergeben.

Demgegenüber ist es Aufgabe der Erfindung, ein Verbundmaterial für Körper oder Schichten mit hoch-verschleißfester Gleit- oder Reiboberfläche aus organischem Polymeren und pulverförmigem anorganischem Glas zu schaffen, bei dem das Glas aus Verstärkungswerkstoff vor allem die Schwingungsfestigkeit bei dynamisch belasteten Bauteilen oder Schichten erhöht und das Abrieb- und Verschleißverhalten wesentlich verbessert.

Überraschenderweise wird dies gemäß der Erfindung dadurch erreicht, daß das Glas als durch Aufbereiten von Altglas gewonnenes, feines Glasmehl mit Teilchengröße ≤ 20 µm in der vom organischen Polymeren gebildeten Matrix verteilt und mit jedem einzelnen Glasteilchen eingebettet ist.

Wie überraschenderweise festgestellt wurde, wird durch dieses feine Glasmehl ein Verbundmaterial geschaffen, das sich durch erheblich bessere Abrieb- und Verschleißeigenschaften auszeichnet, besonders dann, wenn beispielsweise eine dynamische und oszillierende Bewegung zusammentreffen. Bei Verbundmaterialien mit Glasfasern oder Glasteilchen größerer Dimensionen erfolgt bei dieser Bewegungsart bereits nach kurzer Zeit ein Ausbrechen der Glasfasern bzw. gröberen Glasteilchen aus der Kunststoff-Matrix, oder die Glasfaser bzw. größeren Glasteilchen werden bei der oszillierenden Bewegung aus dem Verbund ausgelöst, so daß die Oberfläche des Gegenläufers beschädigt wird. Solche Nachteile werden bei dem erfindungsgemäßen Verbundmaterial mit dem durch Aufbereiten von Altglas gewonnenen, feinen Glasmehl als Zusatzstoff vollständig vermieden, und zwar im wesentlichen dadurch, daß die sehr kleinen Altglasteilchen mit einer Größe von ≤ 20 µm trotzdem einzeln, d. h. völlig voneinander getrennt in die Kunststoffmatrix eingebunden sind. Als besonders überraschend hat sich dabei ergeben, daß ein solches durch Aufbereiten von Altglas gewonnenes feines Glasmehl ohne besondere Vorbehandlung, beispielsweise Vorbehandlung mit einer Schlichte oder anderen haftvermittelnden Substanzen, in die die Matrix bildende makromolekulare Masse eingebettet und in der oben angegebenen hoch wirksamen Weise eingebunden werden kann. Der Einsatz eines solchen durch Aufbereiten von Altglas gewonnenen Glasmehls als Zusatzstoff in Verbundmaterial für Körper oder Schichten mit hoch-verschleißfester Gleit- oder Reiboberfläche ist nicht naheliegend, insbesondere nicht in der Gleitlagertechnik.

Aufgrund der geringen Korngröße von ≤ 20 µm des Glasmehls ist die Herstellung von Schichten geringer Dicke möglich. Die geringe Korngröße mit 100% ≤ 20 µm des Glasmehls ist außerdem besonders vorteilhaft für die bevorzugte Verwendung des erfindungsgemäßen Verbundmaterials für Gleitlagerteile, die hohem Verschleiß oder dynamischer Belastung ausgesetzt sind, wie sie beispielsweise in Stoßdämpfern, Federbeinen und Pumpen auftreten.

Erfüllen vor allem fluorhaltige Polymere, beispielsweise Polytetrafluoräthylen, die mit Glasfasern oder gröberen Glasteilchen oder

2

auch organischen Werkstoffen gefüllt sind, aufgrund des hohen Betriebsverschleißes bei großer Belastung ihre Funktion nur noch ungenügend oder nicht mehr, so haben Versuche ergeben, daß die gleichen thermoplastischen Werkstoffe mit dem erfindungsgemäß als Zusatzstoff vorzusehenden feinen Glasmehl wesentlich geringeren Betriebsverschleiß und somit erheblich längere Lebensdauer aufweisen.

Naturgemäß ist die Verwendung des erfindungsgemäßen Verbundmaterials nicht nur auf Einsatzmöglichkeiten bei Körpern oder Schichten mit hoch-verschleißfester Gleit- oder Reiboberfläche beschränkt, sondern aufgrund seiner kostengünstigen Herstellung auch für die Anwendung auf anderen Gebieten interessant. Wegen der günstigeren chemischen Eigenschaften gegenüber Verbundmaterialien mit Glasfaser und Mikro-Glaskugeln kann das erfindungsgemäße Verbundmaterial auch dort eingesetzt werden, wo dies mit den Glasfaser oder Mikro-Glaskugeln enthaltenden Verbundmaterialien bisher nicht möglich gewesen ist. Das erfindungsgemäße Verbundmaterial ist nicht nur überaus geeignet für die Oberflächenbeschichtung metallischer Gegenstände wie beispielsweise Gleitlager. Es kann jedoch ebensogut im Zusammenhang mit anderen Metallgegenständen verwendet werden, die gleitende oder schlüpfrige Oberflächen aufweisen müssen, wie Kochgeschirr, Bratpfannen, Ventile, Drähte, Metallfolien, Kessel, Rohre und Röhren, Schiffsrümpfe, Ofenunterlagen, Bügeleisenunterplatten, Waffeleisen, Eiswürfelbehälter, Schneeschippen und Schneepflüge, Schütten und Rutschen, Förderanlagen und Förderbänder, Stempel, Matrizen, Spritzgießformen, Werkzeuge wie Sägen, Feilen, Rohre, Trichter, Bunker und andere industrielle Behälter und Formen. Da dem erfindungsgemäßen Verbundmaterial auch Pigmente und Farbstoffe jeglicher Art zugegeben werden können, bietet es auch Anwendungsmöglichkeiten als gegen Korrosion schützende Oberflächenanstriche oder -lackierungen.

Das erfindungsgemäße Verbundmaterial läßt sich mit allen bekannten Verfahren verarbeiten. Es kann dementsprechend für die verschiedensten Verarbeitungsverfahren vorbereitet bzw. formuliert werden.

Soll das erfindungsgemäße Verbundmaterial zur Herstellung eines Schichtwerkstoffes verwendet werden, kann ein Gemisch von pulverförmigem Polymeren, Glasmehl und ggf. pulverförmigen Zusatzstoffen in üblichen Verfahren, beispielsweise Aufbringen mittels Streubalken, Einwalzen, Wirbelsintern oder elektrostatische Pulverbeschichtung als Schicht aufgebracht werden. Es ist aber auch für solche Anwendung möglich, das erfindungsgemäße Verbundmaterial durch Mischen von pulverförmigem Polymerem, Glasmehl und ggf. pulverförmigen Zusatzstoffen, Zusammenschmelzen oder Zusammensintern und erneutes Mahlen in Pulverform vorzubereiten. Dies vorbereitete pulverförmige Verbundmaterial kann dann ebenso durch Ausbringen mittels Streubalken, durch Einwalzen, Wirbelsintern oder elektrostatische Pulverbeschichtung in einer Schicht aufgebracht werden.

Es ist aber auch möglich, das erfindungsgemäße Verbundmaterial in Art eines Lackes aufzustreichen. Will man mit einem solchen lackartigen Material eine Gleitschicht erzeugen, so wird man dazu ein Gemisch von gute Gleiteigenschaften aufweisendem Polymerem, Glasmehl und ggf. die Gleiteigenschaften verbessernden Zusätzen benutzen, das mittels Verdünner oder Lösungsmittel als Gleitlack formuliert ist. Für die Verwendung des erfindungsgemäßen Verbundmaterials für abriebfeste Ansprüche und Beschichtungen kann man ein organisches Polymeres benutzen, das als Lackgrundlage formuliert ist, der das Glasmehl und ggf. Farb- und bzw. oder Pigmentstoffe zugemischt sind.

Das erfindungsgemäße Verbundmaterial hat auch vorzügliche Eignung als plastische Masse für Spritzgießen oder Extrudieren. Hierzu kann ein thermoplastisches Polymeres und Glasmehl enthaltendes Gemisch als Granulat zum Spritzen oder Extrudieren vorbereitet werden. Man kann aber auch das Einarbeiten des Glasmehls bzw. aufbereiteten Glasmehls mit der thermoplastischen Masse im Extruder selbst vornehmen. Hierbei zeigt sich als weiterer Vorteil, daß das Werkzeug wesentlich geringerem Verschleiß unterworfen wird als dies bei thermoplastischen Massen möglich ist, die mit Kurzglasfasern oder Miniglaskugeln gemischt werden. Gleiches gilt auch für die Verarbeitung des erfindungsgemäßen Verbundmaterials in Spritzgußmaschinen.

Auch im elektrostatischen Pulverbeschichten kann das Vermischen der das erfindungsgemäße Verbundmaterial bildenden Komponenten während des Beschichtungsvorganges vorgenommen werden. Es ist aber auch möglich, ein für elektrostatische Pulverbeschichtung geeignetes Pulver aus dem Verbundmaterial in der oben bereits erläuterten Weise vorzubereiten. In jedem Fall können durch elektrostatische Pulverbeschichtung auch Großteile hergestellt werden, die eine durch das erfindungsgemäße Verbundmaterial gebildete abriebfeste Oberfläche aufweisen.

Ein weiteres Anwendungsgebiet stellt die Verwendung des erfindungsgemäßen Verbundmaterials mit duroplastischem Polymerem als Matrixbildner dar. Auch in diesem Anwendungsfall kann das Vermischen des vorzugsweise in Pulverform vorgegebenen duroplatischen Polymeren mit dem Glasmehl und ggf. pulverförmigen Zusatzstoffen während des eigentlichen Verarbeitungsganges des Verbundmaterials erfolgen. Es ist aber auch möglich, das duroplatische Polymeres und Glasmehl enthaltende Verbundmaterial in Tablettenform zum Preßformen oder sonstiger für die Verarbeitung von Duroplastmaterial geeigneten Formulierungen vorzubereiten. Wie die obigen Beispiele zeigen, ist es in jedem Fall möglich, die Verarbeitung des erfindungsgemäßen Verbundmaterials auf allen möglichen, bekannten und denkbaren Bearbeitungsvorrichtungen vorzunehmen.

### Beispiel

Vergleichende Versuche von Trockenlagerwerkstoffen, hergestellt mit dem erfindungsgemäßen Zusatzstoff, der eine Korngröße $\leq 20\,\mu m$ aufweist, gegenüber dem gleichen Trockenlagerwerkstoff ohne den erfindungsgemäßen Zusatzstoff, zeigt, daß ein wesentlich günstigeres Einlaufverhalten der Gleitschicht erreicht wird und weiter ein sehr geringer Betriebsverschleiß vorliegt, ohne daß eine Zunahme des Reibbeiwertes festzustellen ist.

Nachstehend sind die Versuchsbedingungen, die auf der Stift-Walze-Abriebprüfvorrichtung durchgeführt worden sind, aufgezeigt sowie die Versuche, die auf einer Hydropulsanlage durchgeführt wurden.

### Stift-Walze-Abriebprüfvorrichtung

| | |
|---|---|
| Geschwindigkeit: | $100\ m^{-1}$ entspricht $0{,}523\ ms^{-1}$ |
| statische Belastung: | 700 N |
| spezifische Belastung: | $8{,}9\ N \cdot mm^{-2}$ |
| pV-Wert: | $4{,}68\ N \cdot mm^{-2} \cdot m \cdot s^{-1}$ |
| Prüfplättchen-$\varnothing$: | 10 mm |

Gegenläufer:

| | |
|---|---|
| Walzen-$\varnothing$ | 100 mm |
| Härte des Gegenläufers | 60 HRC |
| Rauhigkeit der Prüfwalze | $R_t\ 2{,}04$ $R_a\ 0{,}17$ $R_z\ 1{,}60$ |

Die Verschleißrate betrug nach 30 s Prüfdauer bei dem Trockenlagerwerkstoff ohne den erfindungsgemäßen Zusatzstoff $\geq 50\,\mu m$ und wurde als Ausfall gewertet.

Dagegen zeigte der Werkstoff mit dem erfindungsgemäßen Zusatzstoff nach 30 min einen Verschleiß von etwa $5\,\mu m$ und nach 330 min einen Verschleiß von $\leq 10\,\mu m$.

### Verschleißuntersuchungen auf dem Hydropulsprüfstand

Die Versuche wurden jeweils mit 2 Buchsen unter folgenden Bedingungen durchgeführt:

| | |
|---|---|
| Versuchszeit: | 84 h (3 · 28 h) |
| Lastwechsel: | 3 Mill. (3 · 1 Mill.) |
| Hub: | $\pm 10$ mm |
| Hübe/min: | 600 |
| mittlere Geschwindigkeit: | $0{,}4\ m \cdot s^{-1}$ |
| Funktion: | Sinus |

| | |
|---|---|
| Seitenbelastung: | 2600 N |
| spez. Belastung: | $13\ N \cdot mm^{-2}$ |

Der mit dem erfindungsgemäßen Zusatzstoff gefüllte thermoplastische Kunststoff wies mit $8\,\mu m$ bis $15\,\mu m$ einen äußerst geringen Verschleiß auf. Dagegen wurde der Vergleichswerkstoff ohne den erfindungsgemäßen Zusatzstoff als Ausfall gewertet.

Ein weiterer Vergleich der beiden Trockenlager-Gleitwerkstoffe wurde bei dynamischer Belastung durchgeführt. Der mit dem aufbereiteten Glas als Zusatzstoff versehene Thermoplast wies nach der Versuchsdurchführung keine Beschädigungen der Gleitoberfläche auf. Teilweise Ablösungen der Gleitschicht wurden dagegen am Vergleichswerkstoff festgestellt.

### Hydropulsversuche mit dynamischer Seitenlast

Die Versuche wurden mit 2 Buchsen unter folgenden Bedingungen durchgeführt:

$h_1 = \pm 40$ mm bei 1 Hz
$h_2 = \pm 10$ mm bei 12 Hz

Hub ($h_2$) wurde dabei Hub ($h_1$) überlagert.

| | |
|---|---|
| Funktion: | Sinus |
| Geschwindigkeit: | $h_1 = 0{,}16\ m \cdot s^{-1}$ $h_2 = 0{,}48\ m \cdot s^{-1}$ |
| Versuchsdauer: | 278 h |
| Lastwechsel: | 1 Mio Hübe $h_1$ 12 Mio Hübe $h_2$ |
| Gesamtgleitweg: | 320.000 m |
| Seitenbelastung: | Druckbereich 700 N |
| spez. Belastung: | $2{,}12\ N \cdot mm^{-2}$ |

Eine beispielhafte Zusammensetzung der mit dem erfindungsgemäßen Zusatzstoff hergestellten Mischung bestand aus:

50 Vol.-% PTFE
20 Vol.-% Pb $(MoS_2)$
30 Vol.-% Glas

Glas-Richtanalyse:

| | |
|---|---|
| $SiO_2$ | 71,39 |
| $Al_2O_3$ | 2,25 |
| $Fe_2O_3$ | 0,46 |
| CaO | 9,82 |
| MgO | 0,94 |
| $Na_2O$ | 13,88 |
| $K_2O$ | 0,87 |
| $SO_3$ | 0,13 |
| Erweichungspunkt: | 780 bis 800° C |
| Schmelzbeginn: | 855 bis 880° C |
| Viskosität Pa · s | 950° C $3{,}3 \cdot 10^3$ 1100° C $2{,}7 \cdot 10^2$ 1350° C $2{,}0 \cdot 10$ |

Der Vergleichswerkstoff wies folgende Zusammensetzung auf:

80 Vol.-% PTFE
20 Vol.-% Pb(MoS₂)

Das Gleitlager bestand aus einem Stahlrükken, mit einem aufgesinterten Zinn-Bronze-Gerüst, in das der Thermoplast mit dem Füll- und Zusatzstoff eingebracht wurde.

Ausführungsbeispiele des erfindungsgemäßen Verbundwerkstoffes werden im folgenden anhand der Zeichnung näher erläutert. Es zeigen

Fig. 1 ein Schnittbild stark vergrößert durch einen für Gleitelemente geeignetes Verbundmaterial und

Fig. 2 ein stark vergrößertes Schnittbild durch ein als eingefärbte abriebfeste Beschichtung geeignetes Verbundmaterial.

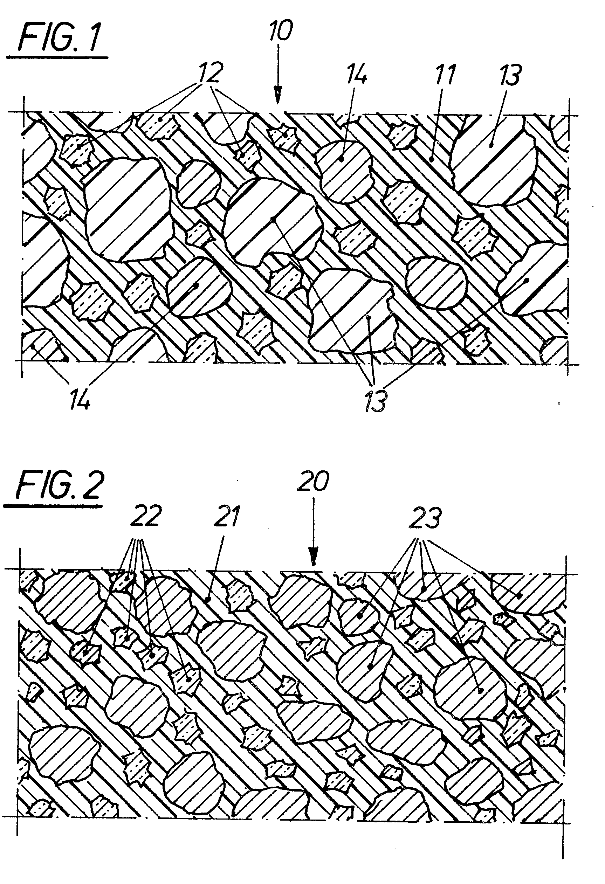

Der in Fig. 1 gezeigte Verbundkörper 10 hat eine Matrix 11 aus thermoplastischem Polyimid. Diese Matrix macht etwa 35 Volumen-Prozent des Bundkörpers aus. In diese Polyimidmatrix 11 sind Glasteilchen 12 eingebettet, die etwa 20 Volumen-Prozent des Verbundkörpers 10 ausmachen und eine Korngröße 100% ≤20 μm aufweisen. Die Glasteilchen sind Silikatglas mit einer Richtanalyse, wie sie oben angegeben ist. In die Polyimidmatrix 11 sind ferner PTFE-Teilchen 13 eingelagert, die Korngröße ≤50 μm aufweisen und etwa 30 Volumen-Prozent des Verbundkörpers 10 ausmachen. Schließlich enthält der Verbundkörper 10 in die Matrix 11 eingelagerte Teilchen 14 aus Blei mit 4% Zinngehalt. Diese Bleiteilchen 14 machen den Rest, d. h. etwa 15 Volumen-Prozent des Verbundkörpers 10 aus.

Im Beispiel der Figur 2 handelt es sich um Verbundmaterial als eingefärbte, abriebfeste Beschichtung 20, in Form einer Oberflächen-Schutzschicht. In einer Matrix 21 aus Polystyrol oder Polyvinylchlorid sind die Glasteilchen 22 eingelagert. Diese Glasteilchen 22 haben Teilchengröße 100% ≤20 μm und machen etwa 25 Volumen-Prozent der Beschichtung 20 aus. Ferner enthält diese Beschichtung 20 Pigment- und Farbteilchen 23, die eine Teilchengröße von etwa 50 μm aufweisen und entsprechend der gewünschten Farbgebung der Beschichtung 20 Teilchen von pulverförmiger Farbe oder eines pulverförmigen Farbgemisches sind. Diese Pigmente machen etwa 35 Volumen-Prozent der Beschichtung 20 aus, so daß die Matrix 21 im wesentlichen den Rest des Beschichtungsvolumens, d. h. etwa 40 Volumen-Prozent einnimmt.

**Patentansprüche**

1. Verbundmaterial für Körper oder Schichten (10, 20) mit hoch-verschleißfester Gleit- oder Reiboberfläche, das ein organisches Polymeres und pulverförmiges anorganisches Glas enthält, dadurch gekennzeichnet, daß das Glas als durch Aufbereiten von Altglas gewonnenes, feines Glasmehl mit Teilchengröße ≤20 μm in der vom organischen Polymeren gebildeten Matrix (11, 21) verteilt und mit jedem einzelnen Glasteilchen (12, 22) eingebettet ist.

2. Verbundmaterial nach Anspruch 1, dadurch gekennzeichnet, daß das Glasmehl aus Silikatglas besteht.

3. Verbundmaterial nach Anspruch 2, dadurch gekennzeichnet, daß das Glasmehl Glas mit den Hauptbestandteilen SiO₂, CaO und Na₂O enthält.

4. Verbundmaterial nach Anspruch 3, dadurch gekennzeichnet, daß das Glas des Glasmehls eine Zusammensetzung (in Gewichtsprozent) hat von:

| | |
|---|---|
| SiO₂ | 71,39 |
| Al₂O₃ | 2,25 |
| Fe₂O₃ | 0,46 |
| CaO | 9,82 |
| MgO | 0,94 |
| Na₂O | 13,88 |
| K₂O | 0,87 |
| SO₃ | 0,13 |

5. Verbundmaterial nach einem der Ansprüche 1 bis 4, dadurch gekennzeichnet, daß das organische Polymere thermoplastisch ist.

6. Verbundmaterial nach Anspruch 5, dadurch gekennzeichnet, daß das organische Polymere einen der folgenden oder ein Gemisch der folgenden Stoffe ist:
Polysulfon, Polycarbonat, Polytetrafluoräthylen, Polyvinylchlorid, Polyamid, Polyimid.

7. Verbundmaterial nach einem der Ansprüche 1 bis 4, dadurch gekennzeichnet, daß das organische Polymere duroplastisch ist.

8. Verbundmaterial nach einem der Ansprüche 1 bis 7, dadurch gekennzeichnet, daß für Verwendung, für die Herstellung von Trockenlagerwerkstoff ein gute Gleiteigenschaften aufweisendes organisches Polymeres mit dem Glasmehl und einem die Gleiteigenschaften verbessernden Zusatz wie Blei, Blei-Zinn-Legierung, Graphit, Molybdänsulfid od. dgl. vermischt ist.

9. Verbundmaterial nach Anspruch 8, gekennzeichnet durch eine Zusammensetzung (in Volumenprozent):

50% PTFE
20% Pb (oder MoS₂)
30% Glasmehl

10. Verbundmaterial nach einem der Ansprüche 1 bis 9, dadurch gekennzeichnet, daß ein Gemisch von gute Gleiteigenschaften aufweisenden Polymeren, Glasmehl und die Gleiteigenschaften verbessernden Zusätzen mittels Verdünner oder Lösungsmittel als Gleitlack formuliert ist.

11. Verbundmaterial nach einem der Ansprüche 1 bis 7, dadurch gekennzeichnet, daß für Verwendung für abriebfeste Anstriche und Beschichtungen das organische Polymere als Lackgrundlage formuliert ist, der als Glasmehl und ggf. Farb- und bzw. oder Pigmentstoffe zugemischt sind.

12. Verbundmaterial nach einem der Ansprüche 1 bis 6, dadurch gekennzeichnet, daß ein thermoplastisches Polymeres und Glasmehl enthaltendes Gemisch als Granulat zum Spritzen oder Extrudieren vorbereitet ist.

13. Verbundmaterial nach einem der Ansprüche 1 bis 4 und 7, dadurch gekennzeichnet, daß ein duroplastisches Polymeres und Glasmehl enthaltendes Gemisch in Tablettenform zum Preßformen vorbereitet ist.

## Claims

1. Composite material for bodies or layers (10, 20) which have a highly waer-resistant sliding or frictional surface and which contains an organic polymer and pulverulent inorganic glass, characterised in that the glass is distributed as a fine glass powder which was obtained by working up scrap glass and has a particle size of $\leq 20\,\mu m$ and embedded with each particular glass particle (12, 22) in the matrix (11, 21) formed by the organic polymer.

2. Composite material according to claim 1, characterised in that the glass powder consists of silicate glass.

3. Composite material according to claim 2, characterised in that the glass powder contains glass containing, as main constituents, $SiO_2$, $CaO$ and $Na_2O$.

4. Composite material according to claim 3, characterised in that the glass of the glass powder has a composition (in per cent by weight) of:

| | |
|---|---|
| $SiO_2$ | 71.39 |
| $Al_2O_3$ | 2.25 |
| $Fe_2O_3$ | 0.46 |
| $CaO$ | 9.82 |
| $MgO$ | 0.94 |
| $Na_2O$ | 13.88 |
| $K_2O$ | 0.87 |
| $SO_3$ | 0.13 |

5. Composite material according to any of claims 1 to 4, characterised in that the organic polymer is thermoplastic.

6. Composite material according to claim 5, characterised in that the organic polymer is one of the following materials or a mixture of the following materials: polysulphone, polycarbonate, polytetrafluoroethylene, polyvinyl chloride, polyamide and polyimide.

7. Composite material according to any of claims 1 to 4, characterised in that the organic polymer is thermosetting.

8. Composite material according to any of claims 1 to 7, characterised in that for use in the preparation of dry-bearing material an organic polymer having goog frictional properties is mixed with the glass powder and an additive improving frictional properties, such as lead, lead-tin alloy, graphite, molybdenum sulphide or the like.

9. Composite material according to claim 8, characterised by a composition (in per cent by volume):

50% of PTFE
20% of Pb (or $MoS_2$) and
30% of glass powder.

10. Composite material according to any of claims 1 to 9, characterised in that a mixture of polymers having good frictional properties, glass powder and additives improving frictional properties is formulated, by means of a diluent or solvent, as an anti-friction paint.

11. Composite material according to any of claims 1 to 7, characterised in that for use for abrasion-resistant paints and coatings the organic polymer is formulated as a paint base to which the glass powder and, if appropriate, dyestuffs and/or pigments have been admixed.

12. Composite material according to any of claims 1 to 6, characterised in that a mixture containing thermoplastic polymer and glass powder is prepared in the form of granules for spraying or extruding.

13. Composite material according to any of claims 1 to 4 and 7, characterised in that a mixture containing thermosetting polymer and glass powder is prepared in the form of tablets for compression-moulding.

## Revendications

1. Matériau composite pour corps ou couches (10, 20) à surface de glissement ou de frottement de grande résistance à l'usure, comprenant un polymère organique et du verre minéral pulvérulent et caractérisé par le fait que le verre, sous forme de fine poudre de verre ayant une grosseur de particules $\leq 20\,\mu m$, obtenue par traitement de vieux verre, est distribué dans la matrice (11, 21) formée par le polymère organique et que, par chacune des particules de verre (12, 22), il est enrobé dans cette gangue.

2. Matériau composite selon la revendication 1, caractérisé par le fait que la poudre de verre est formée de verre au silicate.

3. Matériau composite selon la revendication 2, caractérisé par le fait que la poudre de verre contient du verre ayant comme constituants principaux $SiO_2$, $CaO$ et $Na_2O$.

4. Matériau composite selon la revendication 3, caractérisé par le fait que le verre de la poudre de verre a pour composition (en pourcentages en poids):

| | |
|---|---|
| $SiO_2$ | 71,39 |
| $Al_2O_3$ | 2,25 |
| $Fe_2O_3$ | 0,46 |
| $CaO$ | 9,82 |
| $MgO$ | 0,94 |
| $Na_2O$ | 13,88 |
| $K_2O$ | 0,87 |
| $SO_3$ | 0,13 |

5. Matériau composite selon l'une des revendications 1 à 4, caractérisé par le fait que le polymère organique est thermoplastique.

6. Matériau composite selon la revendication 5, caractérisé par le fait que le polymère organique est l'un des corps suivants ou un mélange de ceux-ci: polysulfone, polycarbonate, polytétrafluoréthylène, polychlorure de vinyle, polyamide, polyimide.

7. Matériau composite selon l'une des revendications 1 à 4, caractérisé par le fait que le polymère organique est thermodurcissable.

8. Matériau composite selon l'une des revendications 1 à 7, caractérisé par le fait que, pour la fabrication de matériau pour entrepôt à sec, un polymère organique présentant de bonnes propriétés de glissement est mélangé à la poudre de verre et à un additif améliorant les propriétés de glissement comme le plomb, l'alliage plomb étain, le graphite, le sulfure de molybdène ou similaires.

9. Matériau composite selon la revendication 8, caractérisé par le fait qu'il a pour composition (en pourcentages en volume):

50% de polytétrafluoréthylène,
20% de Pb (ou MoS$_2$)
30% de poudre de verre.

10. Matériau composite selon l'une des revendications 1 à 9, caractérisé par le fait qu'un mélange de polymère présentant de bonnes propriétés de glissement, de poudre de verre et d'additifs améliorant les propriétés de glissement est préparé sous forme de vernis glissant au moyen de diluants ou de solvants.

11. Matériau composite selon l'une des revendications 1 à 7, caractérisé par le fait que, pour l'utilisation pour des enduits et revêtements résistant à l'usure par frottement, le polymère organique est préparé sous forme de base de peinture à laquelle on mélange de la poudre de verre et, éventuellement, des colorants ou pigments.

12. Matériau composite selon l'une des revendications 1 à 6, caractérisé par le fait qu'un mélange contenant un polymère thermoplastique et de la poudre de verre est préparé sous forme de granulé pour l'injection ou l'extrusion.

13. Matériau composite selon l'une des revendications 1 à 4 et 7, caractérisé par le fait qu'un mélange contenant du polymère thermodurcissable et de la poudre de verre est préparé sous forme de comprimés pour le moulage par compression.

*FIG.1*

*FIG.2*